(19) Europäisches Patentamt
European Patent Office
Office européen des brevets

(11) **EP 2 958 948 B1**

(12) **FASCICULE DE BREVET EUROPEEN**

(45) Date de publication et mention de la délivrance du brevet:
**30.11.2016 Bulletin 2016/48**

(51) Int Cl.:
***C08F 2/32*** *(2006.01)*

(21) Numéro de dépôt: **14713155.1**

(22) Date de dépôt: **18.02.2014**

(86) Numéro de dépôt international:
**PCT/FR2014/050338**

(87) Numéro de publication internationale:
**WO 2014/128400 (28.08.2014 Gazette 2014/35)**

(54) **PROCEDE DE POLYMERISATION EN EMULSION INVERSE BASSE CONCENTRATION DE POLYMERES FABILEMENT NEUTRALISES ET EMULSIONS INVERSES OBTENUES**

VERFAHREN ZUR NIEDRIGKONZENTRIERTEN POLYMERISATION MIT UMGEKEHRTER EMULSION VON SCHWACH NEUTRALISIERTEN POLYMEREN UND DADURCH ERHALTENE INVERSE EMULSIONEN

PROCESS FOR LOW-CONCENTRATION, INVERSE EMULSION POLYMERIZATION OF WEAKLY NEUTRALIZED POLYMERS AND INVERSE EMULSIONS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.02.2013 FR 1351498**

(43) Date de publication de la demande:
**30.12.2015 Bulletin 2015/53**

(73) Titulaire: **S.P.C.M. SA**
**42160 Andrézieux Bouthéon (FR)**

(72) Inventeurs:
• **BLONDEL, Frédéric**
**F-42600 Lezigneux (FR)**
• **CHAMPAGNON, Lionel**
**F-42600 Magneux Haute Rive (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A1- 0 161 038     EP-A1- 0 408 433**
**WO-A1-01/97772     WO-A2-2005/097834**
**FR-A1- 2 790 759**

**Description**

L'invention concerne le domaine technique des polymères synthétiques comprenant une fonction acide faible, classiquement utilisés en tant qu'agents épaississants et/ou stabilisants pour milieux aqueux, et plus précisément, un procédé de fabrication de polymères obtenus par le procédé de polymérisation en émulsion inverse, à partir d'au moins un monomère porteur d'une fonction acide faible, ainsi que les polymères susceptibles d'être obtenus par un tel procédé.

Différents types de polymères formés à partir d'au moins un monomère contenant une fonction acide faible sont utilisés en tant qu'agents épaississants et/ou stabilisants dans différents types d'application. On peut, par exemple, citer les brevets FR 2 810 545 et FR 2 873 126 ou encore le brevet US 3,724,547. Le plus souvent, pour obtenir l'effet épaississant et/ou stabilisant souhaité, de tels polymères sont directement préparés sous la forme de polymères dont les fonctions acide sont au moins partiellement neutralisées, le plus souvent avec un taux de neutralisation supérieur à 50 %, voire même avec un taux de neutralisation de 100 %. En effet, il est connu de l'art antérieur que les épaississants synthétiques obtenus par polymérisation en émulsion inverse et à partir de monomères contenant une fonction acide, comme, par exemple, les polymères d'acide acrylique, doivent être neutralisés totalement ou avec un taux de neutralisation suffisant avant leur utilisation, et ce, pour obtenir un effet épaississant satisfaisant. En effet, la transformation de la fonction acide en sels, permet au polymère de changer d'état et de développer la viscosité d'un milieu aqueux. Le brevet EP 0 161 038 décrit ces propriétés.

Lorsque la préparation des polymères est directement réalisée par un procédé de polymérisation en émulsion inverse eau dans huile, pour des raisons de faisabilité, comme notamment explicité dans le document US 5,216,070, il est nécessaire dans les cas où les polymères souhaités sont réalisés à partir d'au moins un monomère comportant une fonction acide faible tel que l'acide acrylique, d'utiliser pour réaliser la réaction de polymérisation, des monomères dont la fonction acide faible est sous forme neutralisée, afin d'éviter les problèmes de précipitation lors de l'utilisation d'un procédé de préparation par émulsion inverse. Les brevets US 5,380,465, US 4,539,368 et US 4,656,222, et la publication de Chinese Chemical Letters Vol. 13, N°10, pp 993-996, 2002, par exemple, utilisent tous un pourcentage de neutralisation important, voire total, des monomères porteurs d'une fonction acide faible pour réaliser une réaction de polymérisation en émulsion inverse. En effet, comme indiqué dans l'art antérieur, et notamment dans le brevet US 5,216,070, la préparation de tels polymères en l'absence de neutralisation des monomères porteurs d'une fonction acide faible utilisés, directement par le procédé de polymérisation en émulsion inverse, pose un problème de précipitation/déstabilisation. En effet, comme indiqué notamment dans le document US 3,284,393, la préparation d'un latex d'acide polyacrylique par un tel procédé (comme précisé à l'exemple 3) pose un problème de stabilité, le latex obtenu devant être floculé et concentré à l'acide chlorhydrique pour obtenir le polymère par filtration.

Les polymères obtenus par polymérisation en émulsion inverse sont largement utilisés comme agent modificateur de rhéologie. Aussi, il est toujours recherché des polymères dans ce domaine qui présentent des propriétés en termes de viscosité et des pouvoirs épaississants et/ou stabilisants améliorés. La demande de brevet WO 2005/097834, par exemple, propose un procédé de préparation de polymère comportant des fonctions acide sous forme d'émulsion inverse aux propriétés épaississantes améliorées. Les polymères présentent un pourcentage de neutralisation de 25 à 100%, préférentiellement de 30 à 40%.

Le document EP 0 161 038 décrit un procédé similaire à celui de la présente demande, qui diffère cependant en ce que la concentration en monomères dans la phase aqueuse est de 4.9 mmoles.

Dans ce contexte, un des objectifs de la demanderesse a été de développer des polymères obtenus par polymérisation en émulsion inverse présentant des performances épaississantes améliorées. L'invention propose un nouveau procédé qui permet d'atteindre un tel objectif.

Dans le cadre de l'invention, la demanderesse s'est intéressée à la préparation par polymérisation en émulsion inverse, eau dans huile d'émulsions inverses de polymères comportant un pourcentage molaire élevé de monomères porteurs d'une ou plusieurs fonction(s) acide faible par rapport à l'ensemble des monomères utilisés, et en particulier comportant au moins 30 % molaire de monomères porteurs d'au moins une fonction acide faible. Avec un tel taux de monomères porteurs d'une fonction acide faible, les inventeurs ont mis en évidence que les propriétés du polymère obtenu étaient réellement dépendantes, d'une part, du taux de neutralisation des fonctions acides des monomères utilisés lors de la polymérisation et, d'autre part, de la concentration totale des monomères dans la phase aqueuse. De manière originale par rapport aux approches proposées dans l'art antérieur qui préconisent de mener la polymérisation avec un taux important de neutralisation des fonctions acide, la demanderesse s'est orientée, dans le cadre de l'invention, vers un procédé de polymérisation en émulsion inverse de polymères présentant un faible taux de neutralisation et, notamment, un taux de neutralisation des fonctions acide présentes d'au plus 20 %.

Dans le cadre de l'invention, la demanderesse propose un procédé de préparation d'un tel polymère, par polymérisation d'une solution aqueuse de monomères en émulsion inverse eau dans huile, dans lequel la polymérisation est réalisée avec une concentration de la totalité des monomères appartenant à la gamme allant de 1,3 mmol à 3,6 mmol par gramme de solution aqueuse. De plus, la demanderesse a démontré qu'une telle gamme de concentrations, contrairement aux concentrations plus importantes notamment utilisées dans l'art antérieur, était compatible avec l'obtention de polymère avec un faible taux de neutralisation des fonctions acide faible présentes et permettait de s'affranchir des problèmes de stabilité constatés dans l'art antérieur.

Dans ce contexte, la présente invention concerne un procédé de préparation d'un polymère par polymérisation d'une solution aqueuse d'un ou plusieurs monomères en émulsion inverse eau dans huile, dans lequel un ou plusieurs des monomères utilisés comportent au moins une fonction acide, le pourcentage molaire de monomères porteurs d'au moins une fonction acide faible par rapport à l'ensemble des monomères utilisés étant au moins de 30%, caractérisé en ce que :

i) la polymérisation est réalisée avec une concentration de la totalité des monomères en solution aqueuse appartenant à la gamme allant de 1,3 mmol à 3,6 mmol par gramme de solution aqueuse,
ii) lors de la polymérisation, au plus 20% des fonctions acide présentes sur les monomères utilisés possédant au moins une fonction acide se trouvent sous forme neutralisée.

En particulier, lors de la polymérisation, au plus 10%, de préférence au plus 5%, et préférentiellement au plus 2%, des fonctions acide présentes sur les monomères utilisés possédant au moins une fonction acide se trouvent sous forme neutralisée, ce qui permet d'obtenir des propriétés épaississantes encore plus avantageuse. Selon un mode de réalisation particulier, 100% des fonctions acide présentes sur les monomères utilisés se trouvent sous forme acide libre, lors de la polymérisation.

Dans le cadre de l'invention, de manière optimale, la polymérisation est réalisée avec une concentration totale en monomères présents dans la solution aqueuse appartenant à la gamme allant de 1,7 à 3,3 mmol par gramme de solution aqueuse. Dans le cadre de l'invention, les concentrations en monomères sont données par rapport à la masse totale de solution aqueuse (également nommée phase aqueuse), c'est-à-dire masse de monomères comprise.

Notamment, il est donc possible de mener la polymérisation avec les combinaisons suivantes :

- une concentration de la totalité des monomères en solution aqueuse appartenant à la gamme allant de 1,3 mmol à 3,6 mmol par gramme de solution aqueuse, avec au plus 20%, avantageusement au plus 10%, de préférence au plus 5%, et préférentiellement au plus 2%, voire 0% des fonctions acide présentes sur les monomères possédant au moins une fonction acide qui se trouvent sous forme neutralisée,
- une concentration de la totalité des monomères en solution aqueuse appartenant à la gamme allant de 1,7 mmol à 3,3 mmol par gramme de solution aqueuse, avec au plus 20%, avantageusement au plus 10%, de préférence au plus 5%, et préférentiellement au plus 2%, voire 0% des fonctions acide présentes sur les monomères possédant au moins une fonction acide qui se trouvent sous forme neutralisée.

Le pourcentage molaire en monomères porteurs d'au moins une fonction acide faible par rapport à l'ensemble des monomères utilisés est préférentiellement au moins de 50%, préférentiellement d'au moins 70%, très préférentiellement d'au moins 80%. De tels pourcentages molaires peuvent être utilisés, avec n'importe laquelle des combinaisons concentration en monomères/taux de neutralisation précédemment citées.

Dans le cadre de l'invention, on réalisera, de préférence, la polymérisation avec des monomères qui possèdent tous au moins une insaturation éthylénique.

De manière préférée, la polymérisation est réalisé avec un seul monomère porteur d'au moins une fonction acide faible dont le pourcentage molaire par rapport à l'ensemble des monomères utilisés est au moins de 30%, qui, sous forme acide libre, est choisi parmi l'acide acrylique, l'acide méthacrylique, l'acide itaconique, l'acide crotonique, l'acide maléique et l'acide fumarique. Le monomère porteur d'au moins une fonction acide faible est très préférentiellement l'acide acrylique sous forme acide libre ou avec un taux de neutralisation conforme à l'invention. Il est également possible d'utiliser plusieurs monomères porteurs d'au moins une fonction acide faible, notamment choisis parmi ceux précédemment listés, dont le pourcentage molaire total par rapport à l'ensemble des monomères utilisés est au moins de 30%. De préférence, l'un de ces monomères est l'acide acrylique sous forme acide libre ou avec un taux de neutralisation conforme à l'invention.

La polymérisation peut être réalisée avec au moins un monomère porteur d'au moins une fonction acide fort. Dans ce cas, la polymérisation est, de préférence, réalisée avec une concentration en monomères porteurs d'au moins une fonction acide fort par rapport à l'ensemble des monomères utilisés de moins de 50%, et préférentiellement de moins de 30%. La polymérisation peut, par exemple, être menée avec un monomère porteur d'au moins une fonction acide fort qui, sous forme acide libre, est choisi parmi les acides acrylamidoallcylsulfoniques, tel que l'acide 2-acrylamido-2-méthylpropane sulfonique (ATBS). Dans ce cas, la polymérisation peut, par exemple, être menée avec une combinaison acide acrylique/ATBS ou acide acrylique/ATBS/acrylamide, les monomères acide pouvant se trouver sous forme acide libre ou avec un taux de neutralisation conforme à l'invention.

L'invention a également pour objet les polymères susceptibles d'être obtenus par un procédé selon l'invention, quelles que soient ses variantes de mise en oeuvre.

Dans le cadre de l'invention, il a été constaté qu'en sélectionnant une concentration en monomères appartenant à la gamme allant de 1,3 mmol à 3,6 mmol par gramme de solution aqueuse pour réaliser la réaction de polymérisation en émulsion inverse, il était possible de préparer des émulsions inverses de polymères porteurs de fonction acide avec un faible taux de neutralisation, voire aucune neutralisation, qui soient stables, c'est-à-dire sans l'observation d'un phénomène rapide de précipitation. De surcroît, il a été démontré qu'une telle gamme de concentrations, contrairement aux concentrations plus importantes notamment utilisées dans l'art antérieur, associée à une faible neutralisation des fonctions acides présentes, permettait d'obtenir des polymères procurant une efficacité épaississante et/ou stabilisante, après une étape de neutralisation au moins partielle, supérieure aux polymères de l'art antérieur obtenus par polymérisation en émulsion inverse.

Par « monomère porteur d'au moins une fonction acide », on entend un monomère porteur d'une ou plusieurs fonction(s) acide libre ou neutralisée (c'est-à-dire salifiée par action d'une base). Lorsqu'un monomère comporte plus d'une fonction acide, il est possible de n'avoir qu'une partie des fonctions acide sous forme neutralisée. La ou les fonctions acide présente(s) peu(ven)t être une fonction acide faible ou acide fort. En général, les monomères utilisés ne comporteront que des fonctions acide faible ou que des fonction acide fort, et le plus souvent, des monomères porteurs d'une seule fonction acide seront utilisés.

A titre d'exemple de monomère porteur d'au moins une fonction acide faible sous forme acide libre, du type -COOH, on peut citer l'acide acrylique, l'acide méthacrylique, l'acide itaconique, l'acide crotonique, qui comportent tous une seule fonction acide faible, et l'acide maléique et l'acide fumarique qui comportent, quant à eux, deux fonctions acide faible.

A titre d'exemple de monomère porteur d'une fonction acide fort sous forme acide libre, on peut citer les monomères porteurs d'une fonction acide phosphonique ou acide sulfonique tels que les acides acrylamidoalkylsulfoniques tel que l'acide 2-acrylamido-2-méthylpropane sulfonique.

Sous leur forme neutralisée, les fonctions acides sont sous forme anionique avec un contre-ion ou cation dépendant de la base utilisée pour la neutralisation, par exemple, du type $Na^+$ quand la soude est utilisée ou encore $NH_4^+$ quand l'ammoniaque est utilisée. De manière classique, le contrôle du nombre de fonctions acide sous forme neutralisée est assuré par le choix du pH de la solution aqueuse de monomères qui sera ajusté en fonction du pKa des fonctions acide présentes.

La polymérisation peut mettre en jeu un seul type de monomère, alors choisi parmi les monomères porteurs d'au moins une fonction acide faible ou différents types monomères dont un au moins est porteur d'au moins une fonction acide faible, avec une proportion des fonctions acide présentes sur les monomères utilisés, et donc sur le copolymère obtenu, sous une forme neutralisée qui est inférieure ou égale à 20%. En particulier, en plus du ou des monomères porteurs d'au moins une fonction acide faible précédemment décrits, le polymère obtenu peut contenir d'autres monomères tels que des monomères porteurs d'au moins une fonction acide fort, des monomères neutres (ou non-ioniques), des monomères cationiques et/ou encore des monomères à caractère hydrophobes. Quel que soit le cas, les conditions de formation de la phase aqueuse et de polymérisation sont telles que les fonctions acide des monomères mis en jeu restent majoritairement sous forme acide libre, et ne soient pas neutralisées par formation d'une forme salifiée, ou faiblement neutralisées avec un taux de neutralisation limité inférieur ou égal à 20%. Lorsqu'une neutralisation inférieure ou égale à 20% a lieu, elle est, en général, menée dans la phase aqueuse, par ajout d'une quantité de base appropriée. Une base telle que la soude ou l'ammoniaque pourra être utilisée.

Notamment, la réaction de polymérisation peut être réalisée avec au moins un monomère neutre choisi parmi l'acrylamide, le méthacrylamide, le N,N-diméthylacrylamide, le N-vinylméthylacétamide, le N-vinylformamide, l'acétate de vinyle, le diacétoneacrylamide, le N-isopropyl acrylamide, le N-[2-hydroxy-1,1-bis(hydroxyméthyl) éthyl] propénamide, l'acrylate de (2-hydroxyéthyle), l'acrylate de (2,3-dihydroxypropyle), le méthacrylate de méthyle, le méthacrylate de (2-hydroxyéthyle), le méthacrylate de (2,3-dihydroxy propyle), la vinylpyrrolidone, ou d'autres esters acryliques, ou d'autres esters à insaturation éthylénique. Par exemple, la polymérisation peut être réalisée avec de 30 à 99% molaire d'au moins un monomère possédant une ou plusieurs fonction(s) acide faible et de 1 à 70% molaire d'au moins un monomère neutre. La polymérisation peut, par exemple, être menée avec une combinaison acide acrylique/acrylamide, l'acide acrylique étant sous forme neutre ou avec un taux de neutralisation conforme à l'invention.

Il est également possible de réaliser une copolymérisation avec au moins un monomère cationique. A titre d'exemples de monomères cationiques, on peut citer les sels de diallyldialkyl ammonium comme le chlorure de diallyl diméthyl ammonium (DADMAC) ; les sels acidifiés ou quaternisés d'acrylates et méthacrylates de dialkylaminoalkyle, en particulier d'acrylate de dialkylaminoéthyle (ADAME) et de méthacrylate de dialkylaminoéthyle (MADAME) ; les sels acidifiés ou quaternisés de dialkyl-aminoalkylacrylamides ou méthacrylamides, comme, par exemple, le méthacrylamido-propyl triméthyl ammonium chlorure (MAPTAC), l'acrylamido-propyl triméthyl ammonium chlorure (APTAC) et les produits de Mannich comme les dialkylaminométhylacrylamides quaternisés.

Les sels acidifiés sont obtenus par les moyens connus de l'homme de métier, et notamment par protonation. Les sels quaternisés sont également obtenus par les moyens connus de l'homme du métier notamment, par réaction avec le chlorure de benzyle, le chlorure de méthyle (MeCl), les chlorures d'aryle, d'alkyle, ou le diméthylsulfate.

EP 2 958 948 B1

Il est également possible de réaliser une copolymérisation avec au moins un monomère à caractère hydrophobe. A titre d'exemples de monomères à caractère hydrophobes, on peut citer l'acide undecanoïque acrylamide, l'acide undodécyl méthyl acrylamide, les dérivés d'acide acrylique comme les alkyles acrylates ou méthacrylates comme, par exemple, le méthacrylate de béhényl 25 éthoxylé.

Selon une première variante du procédé selon l'invention, tous les monomères porteurs d'au moins une fonction acide utilisés pour mener la polymérisation sont des monomères porteurs d'au moins une fonction acide faible.

Selon une seconde variante du procédé selon l'invention, la polymérisation est réalisée avec au moins un monomère porteur d'au moins une fonction acide fort, en plus d'au moins un monomère porteur d'au moins une fonction acide faible. Dans ce cas, le pourcentage molaire en monomères porteurs d'au moins une fonction acide fort par rapport à l'ensemble des monomères utilisés est préférentiellement de moins de 50%, très préférentiellement de moins de 30%.

Les copolymères obtenus selon le procédé de l'invention peuvent notamment être formés d'une combinaison d'au moins un monomère porteur d'au moins une fonction acide faible et d'au moins un monomère porteur d'au moins une fonction acide fort, et notamment d'une combinaison acide acrylique/ATBS, ces monomères acide étant sous forme neutre ou avec un taux de neutralisation conforme à invention ; d'une combinaison d'au moins un monomère porteur d'au moins une fonction acide faible avec au moins un monomère neutre et éventuellement au moins un monomère porteur d'au moins une fonction acide fort, et notamment d'une combinaison acide acrylique/acrylamide ou d'une combinaison acide acryliquejATBS/acrylamide, l'acide acrylique et l'ATBS étant sous forme neutre ou avec un taux de neutralisation conforme à l'invention ; d'une combinaison d'au moins un monomère porteur d'au moins une fonction acide faible avec au moins un monomère cationique et éventuellement au moins un monomère porteur d'au moins une fonction acide fort ; ou encore d'une combinaison d'au moins un monomère porteur d'au moins une fonction acide faible avec au moins un monomère neutre et au moins un monomère cationique et éventuellement au moins un monomère porteur d'au moins une fonction acide fort.

Les monomères sont mis en solution aqueuse. Cette solution aqueuse correspond à la phase aqueuse de l'émulsion inverse. Conformément à l'invention, dans la solution aqueuse utilisée pour la polymérisation, au plus 20% des fonctions acide présentes sur les monomères possédant au moins une fonction acide se trouvent sous forme neutralisée.

Le procédé selon l'invention est particulièrement adapté à la préparation de polymères hydrosolubles ou hydrogonflants.

Par polymère hydrosoluble, on entend un polymère qui, mis en solution à l'aide d'une agitation dans de l'eau à une température de 25°C à une concentration de 50g/l, donne une solution exempte de particules insolubles.

Par polymère hydro-gonflant, on entend un polymère qui, mis en solution dans de l'eau à une température de 25°C, gonfle et épaissit la solution.

Les polymères obtenus dans le cadre de l'invention peuvent être linéaires, structurés ou réticulés. Par polymère structurés, on entend les polymères branchés, en forme d'étoile (star) ou en forme de peigne (comb). Ces polymères branchés sont, de manière classique, des polymères non linéaires qui possèdent des chaînes latérales. Par polymère réticulé, on entend, de manière classique, un polymère non linéaire qui se présente sous la forme d'un réseau tridimensionnel insoluble dans l'eau, mais gonflable dans l'eau.

Lorsque le polymère obtenu est branché ou réticulé, il l'est plus particulièrement avec un monomère comportant deux ou plus d'insaturations éthyléniques. Pour former un polymère branché ou réticulé, on intègre dans la phase aqueuse au moins un monomère jouant le rôle d'agent de ramification. Un tel agent est, par exemple, choisi parmi le méthylènebisacrylamide (MBA), l'éthylène glycol di-acrylate, le polyéthylène glycol diméthacrylate, le diacrylamide, le cyanométhylacrylate, le vinyloxyéthylacrylate, le vinyloxyméthacrylate, la triallylamine, le formaldéhyde, le glyoxal, les glycidyléthers comme l'éthylèneglycol diglycidyléther, les époxy et leurs mélanges.

Il convient de préciser que, dans le cadre de l'invention, la concentration totale en monomères inclut les monomères jouant le rôle d'agent de ramification.

Le procédé selon l'invention est avantageux pour la préparation de toute structure de polymères linéaires, structurés ou réticulés et est particulièrement adapté à la préparation de polymères branchés ou réticulés.

Il est également possible d'utiliser un agent de transfert, autrement appelé agent limitateur de chaîne. L'utilisation d'un agent de transfert est particulièrement avantageuse pour contrôler le poids moléculaire du polymère obtenu. A titre d'exemple, d'agent de transfert, on peut citer le méthanol, l'isopropanol, l'hypophosphite de sodium, le 2-mercaptoéthanol, le méthallysulfonate de sodium et leur mélange. L'homme du métier ajustera, de manière connue, les quantités utilisées d'agent de ramification et éventuellement d'agent de transfert, en fonction de s'il souhaite obtenir un polymère branché ou réticulé.

De manière plus détaillée, le procédé selon l'invention comprend les étapes suivantes :

    a) Disposer d'une solution aqueuse du ou des monomères sélectionnés, dite phase aqueuse,
    b) Emulsionner ladite solution aqueuse dans une phase non miscible à l'eau, dite phase huile,
    c) Mener la réaction de polymérisation.

Bien entendu, la solution aqueuse de l'étape a) présente une concentration totale en monomères, un pourcentage molaire de monomères porteurs d'au moins une fonction acide faible par rapport à l'ensemble des monomères utilisés et un taux de neutralisation des fonctions acide présentes sur les monomères possédant au moins une fonction acide conformes à l'invention.

Pour obtenir l'effet épaississant désiré, la polymérisation est le plus souvent suivie d'une étape de neutralisation, autrement appelée étape de post-neutralisation, d'au moins une partie, voire de la totalité, des fonctions acide libres présentent sur le polymère. Dans le cas où une étape de neutralisation au moins partielle des fonctions acide libres présentes dans le polymère obtenu est menée après la réaction de polymérisation, elle conduit, de préférence, à un pourcentage de neutralisation par rapport à la totalité des fonctions acide présentes sur le polymère de 30 à 100%.

Une telle étape de post-neutralisation peut être réalisée de différentes manières :

-   la post-neutralisation peut être faite sur l'émulsion inverse obtenue à l'issue du procédé selon l'invention. Généralement, cela est le cas, lorsque le fabricant neutralise lui-même le polymère sous forme d'émulsion inverse.
-   la post-neutralisation peut être faite sur une solution aqueuse obtenue suite à l'inversion de l'émulsion inverse dans de l'eau. Généralement, cela est le cas lorsque l'utilisateur final met en oeuvre l'émulsion inverse, ou la poudre en découlant, dans une solution aqueuse, appelée solution mère, avant d'ajouter cette dernière dans le milieu à épaissir ou à stabiliser. Il a alors la liberté d'ajuster la concentration en polymère de la solution, le taux de neutralisation et la nature des agents neutralisants.
-   la post-neutralisation peut aussi être réalisée sur la composition contenant l'émulsion inverse ou la poudre en découlant. Une telle composition comprend d'autres ingrédients selon l'application visée. Généralement, cela est le cas lorsque l'utilisateur final met en oeuvre l'émulsion inverse, ou la poudre en découlant, directement dans une composition à épaissir ou à stabiliser. De la même manière que le cas précédent, l'utilisateur a la liberté d'ajuster le taux de neutralisation et la nature des agents neutralisants.

La neutralisation est effectuée grâce à une base, de manière similaire à la neutralisation des monomères précédemment décrite, dont la nature et les quantités sont sélectionnées par l'homme du métier.

En général, la réaction de polymérisation est réalisée en présence d'un agent émulsionnant eau dans huile. Ce dernier est le plus souvent introduit dans la phase huile dans laquelle la solution aqueuse est émulsionnée. Par agent émulsifiant du type eau dans huile (E/H), on entend un agent émulsifiant possédant une valeur HLB suffisamment faible pour fournir des émulsions eau dans huile, et notamment une valeur HLB inférieure à 10.

La valeur de HLB est calculée selon la relation suivante :

$$HLB = (\% \text{ en poids de la partie hydrophile}) / 5$$

Le pourcentage en poids de la partie hydrophile étant le rapport entre le poids moléculaire de la partie hydrophile sur le poids moléculaire total de la molécule.

A titre d'exemples de tels agents émulsifiants eau dans huile, on peut citer les polymères tensioactifs tels que les polyesters de poids moléculaire compris entre 1000 et 3000, produits de la condensation entre un acide poly(isobutènyl) succinique ou son anhydride et un polyéthylène glycol, les copolymères à blocs de poids moléculaire compris entre 2500 et 3500, par exemple, ceux commercialisés sous les noms HYPERMER®, les extraits de sorbitan, comme le monooléate de sorbitan, l'isostéarate de sorbitan ou le sesquioléate de sorbitan, certains esters de sorbitan polyéthoxylés, comme le monooléate de sorbitan pentaéthoxylé ou l'isostéarate de sorbitan pentaéthoxylé, ou encore l'alcool oléocétylique diéthoxylé, l'acrylate de lauryle tétraéthoxylé.

La solution aqueuse contient le ou les monomère(s) et éventuellement l'agent de ramification et l'agent de transfert. Elle peut également contenir des agents complexants comme l'éthylène diamine ou l'acide éthylène diamine tétraacétique.

Le plus souvent, la réaction de polymérisation de l'étape c) est amorcée par introduction dans l'émulsion formée à l'étape b) d'un initiateur de radicaux libres. A titre d'exemples d'agent initiateur de radicaux libres, on peut citer les couples oxydant-réducteur avec parmi les oxydants l'hydroperoxyde de cumène ou le butylhydroxypéroxyde tertiaire, et parmi les réducteurs les persulfates tels que le métabisulfite de sodium et le sel de Mohr. Des composés azoïques tels que le 2,2'-azobis(isobutyronitrile) et le chlorhydrate de 2,2'-azobis(2amidinopropane) peuvent également être utilisés.

De manière classique, la polymérisation est généralement menée de manière isotherme, adiabatique ou à température contrôlée, c'est-à-dire que l'on maintient la température constante généralement entre 10 et 50°C (isotherme), ou alors, on laisse la température augmenter naturellement (adiabatique) et dans ce cas, on démarre généralement la réaction à une température inférieure à 10°C et la température finale est généralement supérieure à 50°C, ou enfin, on contrôle la montée en température pour avoir une courbe de température entre celle de l'isotherme et celle de l'adiabatique.

Dans le cadre du procédé selon l'invention, il est possible d'introduire à la fin de la réaction de polymérisation, un ou plusieurs agents émulsifiants huile dans eau, de préférence à une température inférieure à 50°C.

Par agent émulsifiant du type huile dans eau (H/E), on entend un agent émulsifiant possédant une valeur HLB suffisamment élevée pour fournir des émulsions huile dans l'eau et notamment une valeur HLB supérieure à 10. A titre d'exemples de tels agents émulsifiants huile dans eau, on peut citer les esters de sorbitan éthoxylés comme l'oléate de sorbitan éthoxylé avec 20 équivalents d'oxyde d'éthylène (EO 20), le laurate de sorbitan polyéthoxylé avec 20 moles d'oxyde d'éthylène, l'huile de ricin polyéthoxylé avec 40 moles d'oxyde d'éthylène, l'alcool oléodécylique décaéthoxylé, l'alcool laurique heptaéthoxylé, ou le monostéarate de sorbitan polyéthoxylé avec 20 moles d'oxyde d'éthylène.

Dans le cadre de l'invention, les quantités d'agent(s) émulsifiant(s) introduites sont telles que l'émulsion inverse du polymère obtenue, contiendra généralement de 1% à 10% en masse, et de préférence de 2,5% à 9% en masse, d'agents émulsifiants du type eau dans huile (E/H) et, éventuellement, de 2% à 10% en masse, et de préférence de 2,5% à 6% en masse d'agents émulsifiants du type huile dans eau (H/E).

En général, le rapport massique de la phase aqueuse sur la phase huile est de 50/50 à 90/10.

La phase huile peut être composée, par exemple, d'une huile minérale, notamment commerciale, contenant des hydrocarbures saturés de type paraffinique, isoparaffinique, cycloparaffinique, naphtalique présentant à température ambiante (22°C), une densité entre 0,7 et 0,9 ; d'une huile végétale ; d'une huile de synthèse telle que le polydécène hydrogéné ou le polyisobutène hydrogéné ; d'un ester tel que l'octyl stéarate ou le buthyl oléate ; d'une huile végétale comme le squalane d'origine végétale ; ou d'un mélange de plusieurs de ces huiles.

A la fin de la réaction de polymérisation, il est également possible que l'émulsion obtenue soit diluée ou concentrée. En particulier, il est possible de concentrer par distillation, l'émulsion obtenue ou bien de complètement la sécher, afin d'obtenir une poudre. Une telle concentration ou séchage seront, menée avec ou sans introduction préalable d'agent émulsifiant du type huile dans eau (H/E).

La présente invention a également pour objet les polymères sous la forme d'une émulsion inverse eau dans l'huile obtenus par le procédé selon l'invention, quelle que soit sa variante de mise en oeuvre.

Les polymères obtenus selon le procédé de l'invention nécessitent, en général, une étape de neutralisation avant leur utilisation en tant qu'agent épaississant et/ou stabilisant. Sans étape de neutralisation additionnelle, dans les polymères selon l'invention, au plus 20% des fonctions acide présentes sont sous forme neutralisée, de préférence au plus 10%, de manière encore plus préférée au plus 5%, et préférentiellement au plus 2%. Ce faible taux de neutralisation des fonctions acide présentes offre à l'utilisateur une grande souplesse d'utilisation, lui permettant d'ajuster les propriétés du polymère et donc l'effet souhaité, notamment épaississant et/ou stabilisant au moment de l'utilisation, en ajustant, ultérieurement à façon, le taux de neutralisation. Une telle approche permet également à l'utilisateur de choisir la nature de l'agent neutralisant utilisé, compatible avec l'utilisation ciblée. L'invention concerne également de tels polymères soumis ultérieurement à une étape de neutralisation conduisant à un pourcentage de fonctions acide neutralisées par rapport à la totalité des fonctions acide présentes sur le polymère de 30 à 100%.

Ces polymères ainsi neutralisés offrent de bien meilleures propriétés épaississantes, toutes conditions égales par ailleurs, comparés aux polymères obtenus par polymérisation en émulsion inverse ne satisfaisant pas les conditions de concentration et de neutralisation des monomères telles que définies dans le procédé selon l'invention. Particulièrement après neutralisation, les polymères offrent des propriétés avantageuses par rapport à des polymères constitués des mêmes monomères, mais préparés par polymérisation en émulsion inverse directement à des taux de neutralisation supérieur et/ou à une concentration totale en monomères différente.

De manière avantageuse, les polymères obtenus par le procédé selon l'invention permettent après complète neutralisation des fonctions acide libre présentes, ou du moins neutralisation plus importante, d'épaissir et/ou stabiliser bien plus efficacement des milieux aqueux.

Les émulsions inverses obtenues à partir du procédé selon l'invention peuvent être concentrées, par exemple, par distillation. On obtient alors des émulsions inverses dont la concentration en polymère peut être comprise entre 30 et 75% en masse, préférentiellement entre 40 et 65% en masse.

Les polymères obtenus à partir des émulsions inverses de l'invention soumises ultérieurement à une étape d'isolation, pour se trouver sous la forme d'une poudre, font également partie intégrante de l'invention. Une telle étape d'isolation peut, par exemple, être choisie parmi les techniques de précipitation, de distillation azéotropique et de séchage par atomisation et pulvérisation.

En effet, dans le cadre de l'invention, il est possible de concentrer ou d'isoler le polymère sous la forme d'une émulsion inverse obtenu directement en sortie du procédé selon l'invention, sans perdre les propriétés avantageuses des polymères obtenus. Il existe, en particulier, de nombreux procédés d'obtention de poudre à partir d'émulsions inverses de polymères qui consistent à isoler la matière active des autres constituants de l'émulsion comme par exemple :

- la précipitation dans un milieu non solvant tel que l'acétone, le méthanol ou tout autre solvant polaire dans lequel le polymère n'est pas soluble. Une simple filtration permet alors d'isoler la particule de polymère.
- la distillation azéotropique en présence d'agent agglomérant et de polymère stabilisant permet de conduire à des agglomérats que l'on isole facilement par filtration avant de procéder au séchage de la particule.
- le "spray-drying" ou séchage par atomisation, consiste à créer un nuage de fines gouttelettes d'émulsions dans un courant d'air chaud, pendant une durée contrôlée.

## 1. Exemples de préparation d'homopolymère à base d'acide acrylique / acrylate de sodium

Exemple 1 :

On charge dans un bécher de 1 L sous agitation magnétique les ingrédients de la phase aqueuse:

- 150 g d'acide acrylique glacial
- 605 g d'eau déionisée
- 0,023 g d'hypophosphite de sodium
- 0,10 g de diéthylènetriaminepentacétate de sodium
- 0,075 g de méthylènebisacrylamide
- 0,15 g de bromate de sodium

Ensuite dans un réacteur en verre de 1 L, sous agitation mécanique, la phase organique est préparée avec :

- 102 g d'hydrocarbure aliphatique (Isopar L)
- 98 g d'huile minérale blanche (Marcol 152)
- 20 g de monooléate de sorbitol
- 25 g de stabilisant polymérique (Hypermer 1083).

La phase aqueuse est transférée progressivement dans la phase organique. La pré-émulsion ainsi formée est alors soumise à fort cisaillement pendant 1 minute (Ultra Turrax, IKA).
L'émulsion inverse est alors dégazée pendant 30 minutes grâce à un simple barbotage d'azote.
On ajoute alors une solution aqueuse contenant 1,0 % en masse de métabisulfite de sodium à un débit de 2,5 ml/h pendant une durée de 1h30. Une fois la température maximum atteinte, on maintient la température du mélange réactionnel pendant 60 minutes avant refroidissement.
Enfin, on ajoute vers 30°C, 40 g d'alcool tridécylique éthoxylé (6 moles).

Exemple 2 :

On charge dans un bécher de 1 L sous agitation magnétique les ingrédients de la phase aqueuse :

- 175 g d'acide acrylique glacial
- 580 g d'eau déionisée
- 0,03 g d'hypophosphite de sodium
- 0,10 g de diéthylènetriaminepentacétate de sodium
- 0,087 g de méthylènebisacrylamide
- 0,15 g de bromate de sodium

Ensuite, pour la préparation de la phase organique et le reste du procédé de préparation, on procède conformément à l'exemple 1.

Exemple 3 :

On charge dans un bécher de 1 L sous agitation magnétique les ingrédients de la phase aqueuse :

- 100 g d'acide acrylique glacial
- 655 g d'eau déionisée
- 0,02 g d'hypophosphite de sodium
- 0,10 g de diéthylènetriaminepentacétate de sodium
- 0,05 g de méthylènebisacrylamide
- 0,15 g de bromate de sodium

Ensuite, pour la préparation de la phase organique et le reste du procédé de préparation, on procède conformément à l'exemple 1.

Exemple 4 : Neutralisation 3,5%/concentration 2,76

On réalise le même procédé que dans l'exemple 1, en ajoutant dans la phase aqueuse 5,83 g de solution d'hydroxyde de sodium 50%, tout en conservant le même poids de phase aqueuse en ajustant la quantité d'eau désionisée.

Exemple 5 : Neutralisation 19%/concentration 3.5

On charge dans un bécher de 1 L sous agitation magnétique les ingrédients de la phase aqueuse :

- 190 g d'acide acrylique glacial
- 40 g de solution d'hydroxyde de sodium 50%
- 525 g d'eau déionisée
- 0,03 g d'hypophosphite de sodium
- 0,10 g de diéthylènetriaminepentacétate de sodium
- 0,095 g de méthylènebisacrylamide
- 0,15 g de bromate de sodium

Ensuite, pour la préparation de la phase organique et le reste du procédé de préparation, on procède conformément à l'exemple 1.

Exemple comparatif 1 :

On charge dans un bécher de 1 L sous agitation magnétique les ingrédients de la phase aqueuse :

- 50 g d'acide acrylique glacial
- 705 g d'eau déionisée
- 0,01 g d'hypophosphite de sodium
- 0,10 g de diéthylènetriaminepentacétate de sodium
- 0,043 g de méthylènebisacrylamide
- 0,15 g de bromate de sodium

Ensuite, pour la préparation de la phase organique et le reste du procédé de préparation, on procède conformément à l'exemple 1.

Exemple comparatif 2 :

On charge dans un bécher de 1 L sous agitation magnétique les ingrédients de la phase aqueuse :

- 199 g d'acide acrylique glacial
- 115 g de solution d'hydroxyde de sodium 50%
- 441 g d'eau déionisée
- 0,03 g d'hypophosphite de sodium
- 0,10 g de diéthylènetriaminepentacétate de sodium
- 0,15 g de méthylènebisacrylamide
- 0,15 g de bromate de sodium

Ensuite, pour la préparation de la phase organique et le reste du procédé de préparation, on procède conformément à l'exemple 1.

Exemple comparatif 3 :

On charge dans un bécher de 1 L sous agitation magnétique les ingrédients de la phase aqueuse :

- 199 g d'acide acrylique glacial

- 556 g d'eau déionisée
- 0,03 g d'hypophosphite de sodium
- 0,10 g de diéthylènetriaminepentacétate de sodium
- 0,1 g de méthylènebisacrylamide
- 0,15 g de bromate de sodium

Ensuite, pour la préparation de la phase organique, on procède conformément à l'exemple 1.

La phase aqueuse est transférée progressivement dans la phase organique. La pré-émulsion ainsi formée est alors soumise à fort cisaillement pendant 1 minute (Ultra Turrax , IKA).

L'émulsion inverse est alors dégazée pendant 30 minutes grâce à un simple barbotage d'azote.

On ajoute alors une solution aqueuse contenant 1,0 % en masse de métabisulfite de sodium à un débit de 2,5 ml/h. Immédiatement après le début de l'ajout de cette solution réductrice, l'émulsion est déstabilisée puis coagule. La polymérisation est impossible, le système n'est pas stable.

Exemple comparatif 4 :

On charge dans un bécher de 1 L sous agitation magnétique les ingrédients de la phase aqueuse:

- 150 g d'acide acrylique glacial
- 83 g de solution d'hydroxyde de sodium 50%
- 522 g d'eau déionisée
- 0,023 g d'hypophosphite de sodium
- 0,10 g de diéthylènetriaminepentacétate de sodium
- 0,75 g de méthylènebisacrylamide
- 0,15 g de bromate de sodium

Ensuite, pour la préparation de la phase organique et le reste du procédé de préparation, on procède conformément à l'exemple 1.

Caractérisation des polymères

Procédure : Mesure de la viscosité de la solution aqueuse de polymère à iso-concentration [0,16 % en masse]

Dans un bécher de 400 ml on introduit 250 g d'eau déionisée, puis sous agitation mécanique (tripâle - 500 tours par minute), on ajoute progressivement la quantité d'émulsion inverse désirée pour obtenir une solution contenant 0,16% en masse de polymère actif. Le pH est ensuite ajusté à 7 +/-0,1 avec de l'hydroxyde de sodium. A ce pH, 100% des fonctions acide présentes sur le polymère sont neutralisées. La solution est laissée 15 minutes sous agitation puis 5 minutes au repos. La viscosité est alors mesurée à l'aide d'un viscosimètre Brookfield de type RVT avec le module 4 et vitesse de rotation 20 tours par minute.

Les résultats sont consignés dans le **Tableau 1**.

**Tableau 1**

| Exemple | Neutralisation des fonctions acide (%) | Concentration en monomère en mmol/g de phase aqueuse | Viscosité 0,16% dans l'eau (cps) |
|---|---|---|---|
| 1 | 0% | 2,8 | 6500 |
| 2 | 0% | 3,2 | 4000 |
| 3 | 0% | 1,8 | 6200 |
| 4 | 3,5% | 2,8 | 6500 |
| 5 | 19% | 3,5 | 2500 |
| Comparatif 1 | 0% | 0,9 | 1700 |
| Comparatif 2 | 52% | 3,7 | 500 |
| Comparatif 3 | 0% | 3,7 | Emulsion pas stable |

(suite)

| Exemple | Neutralisation des fonctions acide (%) | Concentration en monomère en mmol/g de phase aqueuse | Viscosité 0,16% dans l'eau (cps) |
|---|---|---|---|
| Comparatif 4 | 50% | 2,8 | 1500 |
| Comparatif 5 - ET75 | 50% | 3,8 | 50 |

ET75 est une émulsion inverse commerciale d'homopolymère d'acide acrylique dont 50% des fonctions acide ont été neutralisées avant la polymérisation.

Les polymères obtenus par le procédé de polymérisation en émulsion inverse selon l'invention présentent un effet épaississant bien supérieur aux polymères obtenus par des procédés d'émulsion inverse, ne satisfaisant pas aux conditions de l'invention.

Les polymères obtenus conformément à l'invention sont très efficaces à très faible concentration.

**II. Etude comparative par rapport aux procédés et polymères en émulsion inverse proposés dans l'art antérieur**

L'effet épaississant de polymères obtenus par polymérisation en émulsion inverse tels que décrits dans l'art antérieur, et de polymères obtenus selon l'invention, toutes autres conditions égales par ailleurs, a été comparé.

Les exemples de différents documents de l'art antérieur ont été reproduits et ensuite, seule(s) la concentration et/ou le pourcentage de neutralisation a(ont) été modifié(s) pour correspondre à l'invention. Ensuite, la mise en oeuvre des émulsions inverses et les mesures de viscosités ont été faites selon le même protocole que celui décrit précédemment.

Dans ce qui suit, AA désigne l'acide acrylique, AM l'acrylamide, ATBS l'acide 2-acrylamido-2-méthylpropane sulfonique.

**a.EP 0 161 038**

Les exemples 1A et 1B décrits pages 5-6 du brevet EP 0 161 038 ont été reproduits. Ensuite, ces exemples 1A et 1B ont été modifiés pour correspondre à l'invention.

**Exemple 6**

L'exemple 6 correspond à l'exemple 1A dans lequel les quantités de monomères acrylamide, acide acrylique et MBA ont été diminués et remplacées par de l'eau désionisée, de manière à obtenir la même quantité de phase aqueuse, une concentration totale en monomères de 2,8 mmol/g de phase aqueuse, au lieu de 4,9.

**Exemple 7**

L'exemple 7 correspond à l'exemple 1A dans lequel le même type d'ajustement que dans l'exemple 6 a été effectué, de manière à obtenir une concentration totale en monomères de 3,5 mmol/g de phase aqueuse, au lieu de 4,9.

**Exemple 8**

L'exemple 8 correspond à l'exemple 1B dans lequel le même type d'ajustement concernant les monomères que précédemment ainsi qu'un ajout d'ammoniaque pour neutraliser 20% des fonctions acide a été effectué, de manière à obtenir une concentration totale en monomères de 2,8 mmol/g de phase aqueuse, au lieu de 4,9.

**Exemple 9**

L'exemple 9 correspond à l'exemple 1B dans lequel le même type d'ajustement que dans l'exemple 8 a été effectué, de manière à obtenir une concentration totale en monomères de 3,5 mmol/g de phase aqueuse, au lieu de 4,9.

Les résultats sont consignés dans le **Tableau 2.**

**Tableau 2**

| Exemple | Neutralisation des fonctions acide (%) | Monomères ratio (mol%) | [monomères] mmol/g phase aq. | Viscosité 0,16% dans l'eau (cps) |
|---|---|---|---|---|
| Ex1A de EP 0 161 038 | 0% | AA :80% AM :20% | 4,9 | Coagulation - l'émulsion n'est pas stable |
| 6 | 0% | AA :80% AM :20% | 2,8 | 6800 |
| 7 | 0% | AA :80% AM :20% | 3,5 | 4500 |
| Ex1B de EP 0 161 038 | 20% | AA :80% AM :20% | 4,9 | 50 |
| 8 | 20% | AA :80% AM :20% | 2,8 | 6800 |
| 9 | 20% | AA :80% AM :20% | 3,5 | 5500 |

Ces exemples confirment l'intérêt d'associer une faible concentration en monomères, à une faible neutralisation des monomères à fonction acide. Un tel choix permet de considérablement améliorer les propriétés épaississantes obtenues.

### b. EP 0 503 853

Les exemples 1, 2 et 7 décrits pages 5-6 du brevet EP 0 503 853 ont été reproduits. Ensuite, ces exemples 1, 2 et 7 ont été modifiés pour correspondre à l'invention.

### Exemple 10

L'exemple 10 correspond à l'exemple 1 dans lequel les quantités de monomère acide acrylique et de NaOH ont été diminuées et remplacées par de l'eau désionisée de manière à obtenir la même quantité de phase aqueuse, une concentration totale en monomères de 3,4 mmol/g de phase aqueuse, au lieu de 4,3 et une neutralisation des fonctions acide de 15% au lieu de 100%.

### Exemple 11

L'exemple 11 correspond à l'exemple 2 dans lequel les quantités de monomère acide acrylique, de NaOH et de MBA ont été diminuées et remplacées par de l'eau désionisée de manière à obtenir la même quantité de phase aqueuse, une concentration totale en monomères de 3,4 mmol/g de phase aqueuse, au lieu de 4,3 et une neutralisation des fonctions acide de 15% au lieu de 100%.

### Exemple 12

L'exemple 12 correspond à l'exemple 7 dans lequel les quantités de monomères acrylamide, acide acrylique et de MBA ainsi que de NaOH ont été diminuées et remplacées par de l'eau désionisée de manière à obtenir une concentration totale en monomères de 3,4 mmol/g de phase aqueuse, au lieu de 4,3 et une neutralisation des fonctions acide de 15% au lieu de 100%.

Les résultats sont consignés dans le **Tableau 3**.

**Tableau 3**

| Exemple | Neutralisation des fonctions acide (%) | Monomère(s) ratio (mol%) | [monomère(s)] mmol/g phase aq. | Viscosité 0,16% dans l'eau (cps) |
|---|---|---|---|---|
| Ex1 de EP 0 503 853 | 100% | AA :100% Sans agent de ramification | 4,3 | 10 |
| 10 | 15% | AA :100% Sans agent de ramification | 3,4 | 20 |
| Ex2 de EP 0 503 853 | 100% | AA :100% Avec agent de ramification | 4,3 | 20 |
| 11 | 15% | AA :100% Avec agent de ramification | 3,4 | 6500 |
| Ex7 de EP 0 503 853 | 100% | AM :50% AA :50% Avec agent de ramification | 4,3 | 50 |
| 12 | 15% | AM :50% AA :50% Avec agent de ramification | 3,4 | 4500 |

Ces essais montrent encore l'intérêt du procédé selon l'invention par rapport aux procédés de l'art antérieur. Même dans le cas des polymères linéaires (exemple 1 de EP 0 503 853 et exemple 10) où la viscosité reste faible, la viscosité obtenue double lorsque le procédé selon l'invention est utilisé, ce qui correspond à une amélioration considérable des performances. L'association des deux caractéristiques essentielles de l'invention, à savoir une faible concentration en monomères dans la phase aqueuse associée à un faible taux de neutralisation des monomères à fonctions acide permet d'obtenir des polymères procurant un effet épaississant grandement amélioré, et ce que ce soit avec ou sans la présence d'agent de ramification.

**c. WO 2005/097834**

L'exemple 2 décrit page 14 du brevet WO 2005/097834 a été reproduit. Ensuite, le pourcentage de neutralisation et la concentration en monomères ont été abaissés pour correspondre à l'invention (exemple 13).
Les résultats sont consignés dans le **Tableau 4**.

**Tableau 4**

| Exemple | Neutralisation | Monomère ratio (mol%) | [monomère] mmol/g phase aq. | Viscosité 0,16% dans l'eau (cps) |
|---|---|---|---|---|
| Ex 2 de WO2005/097834 | 37,5% | AA : 100% | 4,7 | 20 |
| Exemple 13 | 18% | AA :100% | 3,4 | 2500 |

Encore, une fois, ces essais montrent l'intérêt du procédé selon l'invention par rapport aux procédés de l'art antérieur, puisqu'il permet de considérablement améliorer le pouvoir épaississant des polymères obtenus.

**d.US 4 677 152**

L'exemple 2 colonne 8 du brevet US 4,677,152 a été reproduit. Ensuite, le pourcentage de neutralisation et la concentration en monomères ont été abaissés pour correspondre à l'invention (exemple 14).
Les résultats sont consignés dans le **Tableau 5.**

**Tableau 5**

| Exemple | Neutralisation des fonctions acide | Monomères ratio | [monomères] mmol/g phase aq. | Viscosité 0,16% dans l'eau (cps) |
|---|---|---|---|---|
| Ex2 de US 4,677,152 | 76% | AM :20% AA :80% | 3,7 | 1500 |
| Exemple 14 | 18% | AM :20% AA :80% | 3,4 | 5500 |

Là encore, l'association des deux caractéristiques essentielles de l'invention, à savoir une faible concentration en monomères dans la phase aqueuse associée à un faible taux de neutralisation des monomères à fonctions acide permet d'obtenir des polymères procurant un effet épaississant supérieur.

**e.EP 0 645 429**

L'exemple 3 page 5 de la demande de brevet EP 0 645 429 a été reproduit. Ensuite, le pourcentage de neutralisation a été abaissé pour correspondre à l'invention (exemple 15 et 16).
Les résultats sont consignés dans le **Tableau 6.**

**Tableau 6**

| Exemple | Neutralisation des fonctions acide | Monomères ratio (mol%) | [monomères] mmol/g phase aq. | Viscosité 0,16% dans l'eau (cps) |
|---|---|---|---|---|
| Ex 3 de EP 0645429 | 73% | AA :90% ATBS :10% | 3,6 | 500 |
| Exemple 15 | 10% | AA :90% ATBS :10% | 2,3 | 6000 |
| Exemple 16 | 20% | AA :90% ATBS :10% | 3,6 | 3000 |

En se plaçant dans les conditions de l'invention, le polymère obtenu présente un effet épaississant largement amélioré.

**Revendications**

**1.** Procédé de préparation d'un polymère par polymérisation d'une solution aqueuse d'un ou plusieurs monomères en émulsion inverse eau dans huile, dans lequel un ou plusieurs des monomères utilisés comportent au moins une fonction acide, le pourcentage molaire de monomères porteurs d'au moins une fonction acide faible par rapport à l'ensemble des monomères utilisés étant au moins de 30%, **caractérisé en ce que** :

i) la polymérisation est réalisée avec une concentration de la totalité des monomères en solution aqueuse appartenant à la gamme allant de 1,3 mmol à 3,6 mmol par gramme de solution aqueuse,
ii) pendant la polymérisation, au plus 20% des fonctions acide présentes sur les monomères possédant au moins une fonction acide se trouvent sous forme neutralisée.

**2.** Procédé selon la revendication 1 **caractérisé en ce que**, pendant la polymérisation, au plus 10%, de préférence au plus 5%, et préférentiellement au plus 2%, des fonctions acide présentes sur les monomères possédant au moins une fonction acide se trouvent sous forme neutralisée.

**3.** Procédé selon la revendication 1 ou 2 **caractérisé en ce que** toutes les fonctions acide présentes sur les monomères se trouvent sous forme acide libre, pendant la polymérisation.

**4.** Procédé selon l'une des revendications précédentes **caractérisé en ce que** la polymérisation est réalisée avec une concentration de la totalité des monomères en solution aqueuse appartenant à la gamme allant de 1,7 à 3,3 mmol par gramme de solution aqueuse.

5. Procédé selon l'une des revendications précédentes **caractérisé en ce que** le pourcentage molaire des monomères porteurs d'une ou plusieurs fonction(s) acide faible par rapport à l'ensemble des monomères utilisés porteurs d'une fonction acide est au moins de 50 %, préférentiellement d'au moins 70%, très préférentiellement d'au moins 80%.

6. Procédé selon l'une des revendications précédentes **caractérisé en ce que** tous les monomères utilisés sont des monomères possédant au moins une insaturation éthylénique.

7. Procédé selon l'une des revendications précédentes **caractérisé en ce que** le monomère porteur d'au moins une fonction acide faible, sous forme acide libre, est choisi parmi l'acide acrylique, l'acide méthacrylique, l'acide itaconique, l'acide crotonique, l'acide maléique et l'acide fumarique, l'acide acrylique étant préféré.

8. Procédé selon l'une des revendications précédentes **caractérisé en ce que** la polymérisation est réalisée avec au moins un monomère neutre choisi parmi l'acrylamide, le méthacrylamide, le N,N-diméthylacrylamide, le N-vinylméthylacétamide, le N-vinylformamide, l'acétate de vinyle, le diacétoneacrylamide, le N-isopropyl acrylamide, le N-[2-hydroxy-1,1-bis(hydroxyméthyl) éthyl] propénamide, l'acrylate de (2-hydroxyéthyle), l'acrylate de (2,3-dihydroxypropyle), le méthacrylate de méthyle, le méthacrylate de (2-hydroxyéthyle), le méthacrylate de (2,3-dihydroxy propyle) et la vinylpyrrolidone.

9. Procédé selon l'une des revendications précédentes **caractérisé en ce que** tous les monomères utilisés porteurs d'au moins une fonction acide sont des monomères porteurs d'une ou plusieurs fonction(s) acide faible.

10. Procédé selon la revendication 9 **caractérisé en ce que** la polymérisation est menée avec un mélange de monomères acide acrylique/acrylamide, avec un taux de neutralisation des fonctions acide conforme à la revendication 1, 2 ou 3.

11. Procédé selon l'une des revendications 1 à 8 **caractérisé en ce que** la polymérisation est réalisée avec au moins un monomère porteur d'une ou plusieurs fonction(s) acide fort.

12. Procédé selon la revendication 11 **caractérisé en ce que** la polymérisation est réalisée avec un pourcentage molaire en monomère porteurs d'une ou plusieurs fonction(s) acide fort par rapport à l'ensemble des monomères utilisés de moins de 50%, et préférentiellement de moins de 30%.

13. Procédé selon la revendication 11 ou 12 **caractérisé en ce que** le monomère porteur d'une ou plusieurs fonction(s) acide fort, sous forme acide libre, est choisi parmi les acides acrylamidoalkylsulfonique tel que l'acide 2-acrylamido-2-méthylpropane sulfonique.

14. Procédé selon la revendication 10, 11 ou 12 **caractérisé en ce que** la polymérisation est menée avec un mélange de monomères acide 2-acrylamido-2-méthylpropane sulfonique/acide acrylique ou un mélange de monomères acide 2-acrylamido-2-méthylpropane sulfonique/acide acrylique/acrylamide, avec un taux de neutralisation des fonctions acide conforme à la revendication 1, 2 ou 3.

15. Procédé selon l'une des revendications précédentes **caractérisé en ce que** la phase aqueuse contient au moins un monomère jouant le rôle d'agent de ramification, de sorte que la polymérisation conduit à un polymère réticulé.

16. Procédé selon la revendication 15 **caractérisé en ce que** l'agent de ramification est choisi parmi le méthylènebisacrylamide (MBA), l'éthylène glycol di-acrylate, le polyéthylène glycol diméthacrylate, le diacrylamide, le cyanométhylacrylate, le vinyloxyéthylacrylate, le vinyloxyméthacrylate, la triallylamine, le formaldéhyde, le glyoxal, les glycidyléthers comme l'éthylèneglycol diglycidyléther, les époxy et leurs mélanges.

17. Procédé selon l'une des revendications précédentes **caractérisé en ce que** la réaction de polymérisation est menée en présence d'un agent émulsionnant eau dans huile.

18. Procédé selon l'une des revendications précédentes **caractérisé en ce qu'**une étape de neutralisation d'au moins une partie des fonctions acides libres présentes sur le polymère est menée, après polymérisation.

19. Procédé selon l'une des revendications précédentes **caractérisé en ce qu'**il utilise un agent de transfert choisi parmi le méthanol, l'alcool isopropylique, l'hypophosphite de sodium, le 2-mercaptoéthanol, le méthallylsulfonate de sodium et leur mélange.

20. Procédé selon l'une des revendications précédentes **caractérisé en ce qu'**il comprend les étapes suivantes :

a) disposer d'une solution aqueuse du ou des monomères sélectionnés, dite phase aqueuse,
b) émulsionner ladite solution aqueuse dans une phase non miscible à l'eau, dite phase huile,
c) mener la réaction de polymérisation.

21. Procédé selon la revendication 20 **caractérisé en ce que** le rapport massique phase aqueuse sur phase huile est de 50/50 à 90/10.

22. Procédé selon la revendication 20 ou 21 **caractérisé en ce que** la phase huile est composée d'une huile minérale contenant des hydrocarbures saturés de type paraffinique, isoparaffinique, cycloparaffinique, naphtalique présentant à température ambiante, une densité entre 0,7 et 0,9 ; d'une huile végétale ; d'une huile de synthèse telle que le polydécène hydrogéné ou le polyisobutène hydrogéné ; d'un ou plusieurs esters tels que l'octyl stéarate et le buthyl oléate ; d'une huile végétale comme le squalane d'origine végétale, ou d'un mélange de plusieurs de ces huiles.

23. Procédé selon l'une des revendications 20 à 22 **caractérisé en ce que** la phase huile dans laquelle la solution aqueuse est émulsionnée, contient un agent émulsionnant eau dans huile.

24. Procédé selon l'une des revendications 20 à 23, la réaction de polymérisation de l'étape c) est amorcée par introduction dans l'émulsion formée à l'étape b) d'un initiateur de radicaux libres.

25. Procédé selon l'une des revendications précédentes, **caractérisé en ce qu'**après la polymérisation, un ou plusieurs agents émulsifiants huile dans eau sont introduits.

26. Procédé selon l'une des revendications 1 à 25 **caractérisé en ce qu'**après la réaction de polymérisation, l'émulsion obtenue est diluée ou concentrée.

27. Procédé selon l'une des revendications 1 à 26 **caractérisé en ce qu'**une étape de neutralisation au moins partielle des fonctions acide libre présentes dans le polymère obtenu est menée après la réaction de polymérisation.

28. Procédé selon la revendication 27 **caractérisé en ce que** l'étape de neutralisation conduit à un pourcentage de fonctions acide neutralisées par rapport à la totalité des fonctions acide présentes sur le polymère de 30 à 100%.

29. Procédé selon l'une des revendications 1 à 28 **caractérisé en ce qu'**il comporte après la polymérisation une étape d'isolation ultérieure à l'issu de laquelle le polymère se trouve sous la forme d'une poudre.

30. Procédé selon la revendication 29 **caractérisé en ce que** l'étape d'isolation est choisie parmi les techniques de précipitation, de distillation azéotropique et de séchage par atomisation et pulvérisation.

31. Polymère obtenu par le procédé tel que défini à l'une des revendications 1 à 30.

32. Polymère selon la revendication 31 dans lequel au plus 20% des fonctions acide présentes sont sous forme neutralisée, de préférence au plus 10%, de manière encore plus préférée au plus 5%, et préférentiellement au plus 2%.

33. Polymère selon la revendication 31 comprenant un pourcentage de fonctions acide neutralisées par rapport à la totalité des fonctions acide présentes sur le polymère de 30 à 100%, du fait d'une neutralisation ultérieure des fonctions acides, par mise en oeuvre d'un procédé selon la revendication 18.

34. Polymère selon l'une des revendications 31 à 33 **caractérisé en ce qu'**il est branché ou réticulé.

35. Polymère selon l'une des revendications 31 à 34 **caractérisé en ce qu'**il est hyrdrosoluble ou hydro-gonflant.

36. Emulsion inverse eau dans l'huile comprenant le polymère selon l'une des revendications 3 à 35.

37. Polymère selon l'une des revendications 31 à 35 **caractérisé en ce qu** il est sous la forme d'une poudre, du fait d'une étape d'isolation ultérieure, par mise en oeuvre d'un procédé selon la revendication 29 ou 30.

**Patentansprüche**

1. Verfahren zur Herstellung eines Polymers durch Polymerisation einer wässerigen Lösung aus einem oder mehreren Monomeren in inverser Emulsion Wasser in Öl, bei dem ein oder mehrere der verwendeten Monomere mindestens eine saure Funktion umfassen, wobei der Molprozentsatz von Monomeren, die mindestens eine schwache saure Funktion bezogen auf die Gesamtheit von verwendeten Monomeren tragen, mindestens 30 % beträgt, **dadurch gekennzeichnet, dass**:

    i) die Polymerisation mit einer Konzentration der Gesamtheit der Monomere in wässeriger Lösung erfolgt, die im Bereich von 1,3 mmol bis 3,6 mmol pro Gramm wässeriger Lösung liegt,
    ii) während der Polymerisation höchstens 20 % der sauren Funktionen, die auf den Monomeren vorhanden sind, die mindestens eine saure Funktion besitzen, in neutralisierter Form vorliegen.

2. Verfahren nach Anspruch 1, **dadurch gekennzeichnet, dass** während der Polymerisation höchstens 10%, vorzugsweise höchstens 5 % und noch bevorzugter höchstens 2 % der sauren Funktionen, die auf den Monomeren vorhanden sind, die mindestens eine saure Funktion besitzen, in neutralisierter Form vorliegen.

3. Verfahren nach Anspruch 1 oder 2, **dadurch gekennzeichnet, dass** alle sauren Funktionen, die auf den Monomeren vorhanden sind, in freier saurer Form während der Polymerisation vorliegen.

4. Verfahren nach einem der vorhergehenden Ansprüche, **dadurch gekennzeichnet, dass** die Polymerisation mit einer Konzentration der Gesamtheit der Monomere in wässeriger Lösung erfolgt, die dem Bereich von 1,7 bis 3,3 mmol pro Gramm wässeriger Lösung liegt.

5. Verfahren nach einem der vorhergehenden Ansprüche, **dadurch gekennzeichnet, dass** der Molprozentsatz der Monomere, die eine oder mehrere schwache saure Funktionen bezogen auf die Gesamtheit der verwendeten Monomere mit saurer Funktion tragen, mindestens 50 %, vorzugsweise mindestens 70 %, noch bevorzugter mindestens 80 % beträgt.

6. Verfahren nach einem der vorhergehenden Ansprüche, **dadurch gekennzeichnet, dass** alle verwendeten Monomere Monomere sind, die mindestens eine ethylenisch ungesättigte Verbindung besitzen.

7. Verfahren nach einem der vorhergehenden Ansprüche, **dadurch gekennzeichnet, dass** das Monomer, das mindestens eine schwache saure Funktion in freier saurer Form trägt, unter der Acrylsäure, der Methacrylsäure, der Itaconsäure, der Crotonsäure, der Maleinsäure und der Fumarsäure ausgewählt ist, wobei die Acrylsäure bevorzugt wird.

8. Verfahren nach einem der vorhergehenden Ansprüche, **dadurch gekennzeichnet, dass** die Polymerisation mit mindestens einem neutralen Monomer erfolgt, das ausgewählt ist unter Acrylamid, Methacrylamid, N,N-Dimehtylacrylamid, N-Vinylmethylacetamid, N-Vinylformarnid, Vinylacetat, Diacetonacrylamid, N-Isopropylacrylamid, N-[2-hydroxy-1,1-bis(hydroxymethyl)ethyl]propenamid, (2-hydroxyethyl)acrylat, (2,3-dihydroxypropyl)acrylat, Methylmethacrylat, (2-hydroxyethyl)methacrylat, (2,3-dihydroxypropyl)methacrylat und Vinylpyrrolidon.

9. Verfahren nach einem der vorhergehenden Ansprüche, **dadurch gekennzeichnet, dass** alle verwendeten Monomere, die mindestens eine saure Funktion tragen, Monomere sind, die eine oder mehrere schwache saure Funktion(en) tragen.

10. Verfahren nach Anspruch 9, **dadurch gekennzeichnet, dass** die Polymerisation mit einem Gemisch von sauren Monomeren Acryl/Acrylamid mit einer Neutralisierungsrate der sauren Funktionen gemäß dem Anspruch 1, 2 oder 3 durchgeführt wird.

11. Verfahren nach einem der Ansprüche 1 bis 8, **dadurch gekennzeichnet, dass** die Polymerisation mit mindestens einem Monomer, das eine oder mehrere starke saure Funktion(en) trägt, erfolgt.

12. Verfahren nach Anspruch 11, **dadurch gekennzeichnet, dass** die Polymerisation mit einem Molprozentsatz an Monomeren, die eine oder mehrere starke saure Funktion(en) tragen, bezogen auf die Gesamtheit der verwendeten Monomere von weniger als 50 %, vorzugsweise von weniger als 30 %, erfolgt.

13. Verfahren nach Anspruch 11 oder 12, **dadurch gekennzeichnet, dass** das Monomer, das eine oder mehrere starke saure Funktion(en) in freier saurer Form trägt, unter den Acrylamidalkylsulfonsäuren, wie der 2-Acrylamid-2-methylpropansulfonsäure, ausgewählt ist.

14. Verfahren nach Anspruch 10, 11 oder 12, **dadurch gekennzeichnet, dass** die Polymerisation mit einem Gemisch von Monomeren 2-Acrylamid-2-methylpropansulfonsäure / Acrylsäure oder einem Gemisch von Monomeren 2-Acrylamid-1-methylprogansulfonsäure / Acryl-/Acrylamidsäure mit einer Neutralisierungsrate der sauren Funktionen gemäß Anspruch 1, 2 oder 3 durchgeführt wird.

15. Verfahren nach einem der vorhergehenden Ansprüche, **dadurch gekennzeichnet, dass** die wässerige Phase mindestens ein Monomer enthält, das die Rolle eines Verzweigungsmittels spielt, so dass die Polymerisation zu einem vernetzten Polymer führt.

16. Verfahren nach Anspruch 15, **dadurch gekennzeichnet, dass** das Verzweigungsmittel unter Methylenbisacrylamid (MBA), Ethylenglykoldiacrylat, Polyethylenglykoldimethacrylat, Diacrylamid, Cyanmethylacrylat, Vinylaxyethylacrylat, Vinyloxymethacrylat, Triallylamin, Formaldehyd, Glyoxal, den Glycidylethern, wie Ethylenglykoldiglycidether, den Epoxiden und ihren Gemischen ausgewählt ist.

17. Verfahren nach einem der vorhergehenden Ansprüche, **dadurch gekennzeichnet, dass** die Polymerisationsreaktion im Beisein eines Emulgators Wasser in Öl stattfindet.

18. Verfahren nach einem der vorhergehenden Ansprüche, **dadurch gekennzeichnet, dass** ein Schritt der Neutralisierung mindestens eines Teils der freien sauren Funktionen, die auf dem Polymer vorhanden sind, nach der Polymerisation durchgeführt wird.

19. Verfahren nach einem der vorhergehenden Ansprüche, **dadurch gekennzeichnet, dass** ein Weiterleitungsmittel verwendet wird, das ausgewählt ist unter Methanol, Isopropylalkohol, Natriumhypophosphit, 2-Mercaptoethanol, Natriummethallylsulfonat und ihrem Gemisch.

20. Verfahren nach einem der vorhergehenden Ansprüche, **dadurch gekennzeichnet, dass** es die folgenden Schritte umfasst:

   a) Bereitstellen einer wässerigen Lösung des oder der ausgewählten Monomere, wässerige Phase genannt,
   b) Emulgieren der wässerigen Lösung in einer nicht mit Wasser mischbaren Phase, Ölphase genannt,
   c) Durchführen der Polymerisationsreaktion.

21. Verfahren nach Anspruch 20, **dadurch gekennzeichnet, dass** das Masseverhältnis wässerige Phase zu Ölphase 50/50 bis 90/10 beträgt.

22. Verfahren nach Anspruch 20 oder 21, **dadurch gekennzeichnet, dass** die Ölphase aus einem Mineralöl, das gesättigte Kohlenwasserstoffe vom Typ Paraffin, Isoparaffin, Zykloparaffin, Naphtalen enthält, das bei Raumtemperatur eine Dichte zwischen 0,7 und 0,9 aufweist, aus einem Pflanzenöl, aus einem Syntheseöl, wie hydriertes Polydecen oder hydriertes Polyisobuten, aus einem oder mehreren Estern, wie Octylstearat und Butyloleat, aus einem Pflanzenöl, wie Squalan pflanzlichen Ursprungs, oder aus einem Gemisch mehrerer dieser Öle zusammengesetzt ist.

23. Verfahren nach einem der Ansprüche 20 bis 22, **dadurch gekennzeichnet, dass** die Ölphase, in der die wässerige Lösung emulgiert wird, einen Emulgator Wasser in Öl enthält.

24. Verfahren nach einem der Ansprüche 20 bis 23, bei dem die Polymerisationsreaktion des Schrittes c) durch Einführen eines freien Radikal-Initiators in die in Schritt b) gebildete Emulsion eingeleitet wird.

25. Verfahren nach einem der vorhergehenden Ansprüche, **dadurch gekennzeichnet, dass** nach der Polymerisation ein oder mehrere Emulgatoren Öl in Wasser eingeführt werden.

**26.** Verfahren nach einem der Ansprüche 1 bis 25, **dadurch gekennzeichnet, dass** nach der Polymerisationsreaktion die erhaltene Emulsion verdünnt oder konzentriert wird.

**27.** Verfahren nach einem der Ansprüche 1 bis 26, **dadurch gekennzeichnet, dass** ein zumindest teilweiser Neutralisierungsschritt der freien sauren Funktionen, die in dem erhaltenen Polymer vorhanden sind, nach der Polymerisationsreaktion durchgeführt wird.

**28.** Verfahren nach Anspruch 27, **dadurch gekennzeichnet, dass** der Neutralisierungsschritt zu einem Prozentsatz von neutralisierten sauren Funktionen bezogen auf die Gesamtheit der auf dem Polymer vorhandenen sauren Funktionen von 30 bis 100% führt.

**29.** Verfahren nach einem der Ansprüche 1 bis 28, **dadurch gekennzeichnet, dass** es nach der Polymerisation einen Schritt der späteren Isolation umfasst, nach dem das Polymer in Form eines Pulvers vorhanden ist.

**30.** Verfahren nach Anspruch 29, **dadurch gekennzeichnet, dass** der Schritt der Isolation unter den Techniken der Ausfällung, der azeotropischen Destillation und der Trocknung durch Sprühen oder Zerstäuben ausgewählt ist.

**31.** Polymer, das durch das Verfahren, wie in einem der Ansprüche 1 bis 30 definiert, erhalten wird.

**32.** Polymer nach Anspruch 31, bei dem höchstens 20 % der vorhandenen sauren Funktionen in neutralisierter Form vorhanden sind, vorzugsweise höchstens 10 %, auf noch bevorzugtere Weise höchstens 5 % und besonders bevorzugt höchstens 2 %.

**33.** Polymer nach Anspruch 31, umfassend einen Prozentsatz von neutralisierten sauren Funktionen bezogen auf die Gesamtheit der sauren Funktionen, die auf dem Polymer vorhanden sind, von 30 bis 100 % auf Grund einer späteren Neutralisierung der sauren Funktionen durch Einsatz eines Verfahrens nach Anspruch 18.

**34.** Polymer nach einem der Ansprüche 31 bis 33, **dadurch gekennzeichnet, dass** es verzweigt oder vernetzt ist.

**35.** Polymer nach einem der Ansprüche 31 bis 34, **dadurch gekennzeichnet, dass** es wasserlöslich oder wasserschwellbar ist.

**36.** Inverse Emulsion Wasser in Öl, umfassend das Polymer nach einem der Ansprüche 31 bis 35.

**37.** Polymer nach einem der Ansprüche 31 bis 35, **dadurch gekennzeichnet, dass** es in Form eines Pulvers auf Grund eines Schrittes der späteren Isolation durch Einsatz eines Verfahrens nach Anspruch 29 oder 30 vorhanden ist.

**Claims**

**1.** A process for preparing a polymer by polymerization of an aqueous solution of one or more monomers in water-in-oil inverse emulsion, in which one or more of the monomers used comprise(s) at least one acid function, the molar percentage of monomers bearing at least one weak acid function relative to all the monomers used being at least 30%, wherein:

i) the polymerization is carried out with a concentration of all the monomers in aqueous solution which falls within the range of from 1.3 mmol to 3.6 mmol per gram of aqueous solution,
ii) during the polymerization, at most 20% of the acid functions present on the monomers which have at least one acid function are in neutralized form.

**2.** The process as claimed in claim 1, wherein, during the polymerization, at most 10%, preferably at most 5%, and preferentially at most 2%, of the acid functions present on the monomers which have at least one acid function are in neutralized form.

**3.** The process as claimed in claim 1 or 2, wherein all the acid functions present on the monomers are in free acid form during the polymerization.

**4.** The process as claimed in one of the preceding claims, wherein the polymerization is carried out with a concentration of all the monomers in aqueous solution which falls within the range of from 1.7 to 3.3 mmol per gram of aqueous solution.

5. The process as claimed in one of the preceding claims, wherein the molar percentage of monomers bearing one or more weak acid function(s) relative to all the monomers used which bear an acid function is at least 50%, preferentially at least 70%, and very preferentially at least 80%.

6. The process as claimed in one of the preceding claims, wherein all the monomers used are monomers which have at least one ethylenic unsaturation.

7. The process as claimed in one of the preceding claims, wherein the monomer bearing at least one weak acid function, in free acid form, is chosen from acrylic acid, methacrylic acid, itaconic acid, crotonic acid, maleic acid and fumaric acid, acrylic acid being preferred.

8. The process as claimed in one of the preceding claims, wherein the polymerization is carried out with at least one neutral monomer chosen from acrylamide, methacrylamide, N,N-dimethylacrylamide, N-vinylmethylacetamide, N-vinylformamide, vinyl acetate, diacetone acrylamide, N-isopropylacrylamide, N-[2-hydroxy-1,1-bis(hydroxymethyl)ethyl]propenamide, (2-hydroxyethyl) acrylate, (2,3-dihydroxypropyl) acrylate, methyl methacrylate, (2-hydroxyethyl) methacrylate, (2,3-dihydroxypropyl) methacrylate and vinylpyrrolidone.

9. The process as claimed in one of the preceding claims, wherein all the monomers used which bear at least one acid function are monomers bearing one or more weak acid function(s).

10. The process as claimed in claim 9, wherein the polymerization is carried out with a mixture of acrylic acid/acrylamide monomers, with a degree of neutralization of the acid functions in accordance with claim 1, 2 or 3.

11. The process as claimed in one of claims 1 to 8, wherein the polymerization is carried out with at least one monomer bearing one or more strong acid function(s).

12. The process as claimed in claim 11, wherein the polymerization is carried out with a molar percentage of monomers bearing one or more strong acid function(s) relative to all the monomers used of less than 50%, and preferentially of less than 30%.

13. The process as claimed in claim 11 or 12, wherein the monomer bearing one or more strong acid function(s), in free acid form, is chosen from acrylamidoalkylsulfonic acids, such as 2-acrylamido-2-methylpropanesulfonic acid.

14. The process as claimed in claim 10, 11 or 12, wherein the polymerization is carried out with a mixture of 2-acrylamido-2-methylpropanesulfonic acid/acrylic acid monomers or a mixture of 2-acrylamido-2-methylpropanesulfonic acid/acrylic acid/acrylamide monomers, with a degree of neutralization of the acid functions in accordance with claim 1, 2 or 3.

15. The process as claimed in one of the preceding claims, wherein the aqueous phase contains at least one monomer acting as a branching agent, such that the polymerization results in a crosslinked polymer.

16. The process as claimed in claim 15, wherein the branching agent is chosen from methylenebisacrylamide (MBA), ethylene glycol diacrylate, polyethylene glycol dimethacrylate, diacrylamide, cyanomethyl acrylate, vinyloxyethyl acrylate, vinyloxy methacrylate, triallylamine, formaldehyde, glyoxal, glycidyl ethers such as ethylene glycol diglycidyl ether, and epoxies, and mixtures thereof.

17. The process as claimed in one of the preceding claims, wherein the polymerization reaction is carried out in the presence of a water-in-oil emulsifier.

18. The process as claimed in one of the preceding claims, wherein a step of neutralization of at least one part of the free acid functions present on the polymer is carried out, after polymerization.

19. The process as claimed in one of the preceding claims, which uses a transfer agent chosen from methanol, isopropyl alcohol, sodium hypophosphite, 2-mercaptoethanol and sodium methallyl sulfonate, and mixtures thereof.

**20.** The process as claimed in one of the preceding claims, which comprises the following steps:

  a) providing an aqueous solution of the monomer(s) selected, termed aqueous phase,
  b) emulsifying said aqueous solution in a water-immiscible phase, termed oil phase,
  c) carrying out the polymerization reaction.

**21.** The process as claimed in claim 20, wherein the weight ratio of the aqueous phase to the oil phase is from 50/50 to 90/10.

**22.** The process as claimed in claim 20 or 21, wherein the oil phase is composed of a mineral oil containing saturated hydrocarbons of paraffinic, isoparaffinic, cycloparaffinic or naphthyl type having, at ambient temperature, a density of between 0.7 and 0.9; of a vegetable oil; of a synthetic oil such as hydrogenated polydecene or hydrogenated polyisobutene; of one or more esters such as octyl stearate or butyl oleate; of a vegetable oil such as squalane of vegetable origin; or of a mixture of several of these oils.

**23.** The process as claimed in one of claims 20 to 22, wherein the oil phase in which the aqueous solution is emulsified contains a water-in-oil emulsified.

**24.** The process as claimed in one of claims 20 to 23, wherein the polymerization reaction of step c) is initiated by introducing into the emulsion formed in step b) a free radical initiator.

**25.** The process as claimed in one of the preceding claims, wherein, after the polymerization, one or more oil-in-water emulsifiers are introduced.

**26.** The process as claimed in one of claims 1 to 25, wherein, after the polymerization reaction, the emulsion obtained is diluted or concentrated.

**27.** The process as claimed in one of claims 1 to 26, wherein a step of at least partial neutralization of the free acid functions present in the polymer obtained is carried out after the polymerization reaction.

**28.** The process as claimed in claim 27, wherein the neutralization step results in a percentage of neutralized acid functions relative to all the acid functions present on the polymer of from 30% to 100%.

**29.** The process as claimed in one of claims 1 to 28, wherein it includes after the polymerization, a subsequent isolation step, at the end of which the polymer is in the form of a powder.

**30.** The process as claimed in claim 29, wherein the isolation step is chosen from precipitation, azeotropic distillation and spray-drying techniques.

**31.** A polymer obtained by means of the process as defined in one of claims 1 to 30.

**32.** The polymer as claimed in claim 31, wherein at most 20% of the acid functions present are in neutralized form, preferably at most 10%, even more preferably at most 5%, and preferentially at most 2%.

**33.** The polymer as claimed in claim 31, comprising a percentage of neutralized acid functions relative to all the acid functions present on the polymer of from 30% to 100%, resulting from a subsequent neutralization of acid functions, by implementing a process according to claim 18.

**34.** The polymer as claimed in one of claims 31 to 33, which is branched or crosslinked.

**35.** The polymer as claimed in one of claims 31 to 34, which is watersoluble or water-swelling.

**36.** A water-in-oil inverse emulsion comprising the polymer as claimed in one of claims 31 to 35.

**37.** The polymer as claimed in one of claims 31 to 35, wherein it is in the form of a powder, resulting from a subsequent isolation step, by implementary the process according to claim 29 or 30.

## RÉFÉRENCES CITÉES DANS LA DESCRIPTION

**Documents brevets cités dans la description**

- FR 2810545
- FR 2873126
- US 3724547 A
- EP 0161038 A
- US 5216070 A
- US 5380465 A
- US 4539368 A

- US 4656222 A
- US 3284393 A
- WO 2005097834 A
- EP 0503853 A
- US 4677152 A
- EP 0645429 A

**Littérature non-brevet citée dans la description**

- *Chinese Chemical Letters,* 2002, vol. 13 (10), 993-996